# EUROPÄISCHE PATENTSCHRIFT

(11) **EP 4 301 822 B1**
(45) Veröffentlichungstag und Bekanntmachung des Hinweises auf die Patenterteilung: **11.09.2024**
(21) Anmeldenummer: 21710448.8
(22) Anmeldetag: 05.03.2021
(51) Int. Cl.: C09D 183/04, C08G 77/00, C08K 9/06, C09C 1/30

(54) **SILOXAN-FUNKTIONALISIERTE KIESELSÄURE**
SILOXANE-FUNCTIONALIZED SILICA
SILICE FONCTIONNALISÉE PAR SILOXANE

(43) Veröffentlichungstag der Anmeldung: 10.01.2024
(73) Patentinhaber: Wacker Chemie AG, 81671 München (DE)
(72) Erfinder: LEIB, Elisabeth, 84489 Burghausen (DE)
(74) Vertreter: Belz, Ferdinand
(86) Internationale Anmeldenummer: PCT/EP2021/055602
(87) Internationale Veröffentlichungsnummer: WO 2022/184271

(56) Entgegenhaltungen:
- EP-A2- 0 251 176

## Beschreibung

Die Erfindung betrifft Kieselsäuren, die mit einem von [Me₂SiO_{2/2}]-Einheiten freien Siloxan der allgemeinen Formel (I) funktionalisiert sind und ein Verfahren zur Herstellung solcher Kieselsäuren.

Siloxane sind eine technisch wichtige Verbindungsklasse, die in zahlreichen Technologiefeldern eingesetzt wird. Die Herstellung von Siloxanen ist ein wichtiger Prozess in der technischen Organosiliciumchemie. Großtechnisch etabliert ist beispielsweise die hydrolytische Kondensation ausgehend von Chlorsilanen gemäß der nachstehenden Reaktionsgleichung:

2 R₃Si-Cl + H₂O => R₃Si-O-SiR₃ + 2 HCl

Auch die hydrolytische Kondensation von Alkoxygruppen-haltigen Silanen und Siloxanen, welche jeweils großtechnisch produzierte Rohstoffe sind, ist etabliert:

R₃Si-OR + H₂O => R₃Si-OH + ROH;

2 R₃Si-OH => R₃Si-O-SiR₃ + H₂O

Pyrogene Kieselsäuren sind weit verbreitete Additive für die Steuerung der Fließeigenschaften von beispielsweise Klebstoffen, Dichtstoffen und Beschichtungsstoffen wie Farben oder Lacken. Sie dienen insbesondere zur Einstellung der Viskosität, der scherverdünnenden und thixotropen Eigenschaften und der Fließgrenze.

Unfunktionalisierte Kieselsäuren werden üblicherweise für unpolare, höhermolekulare Systeme mit hohem Lösungsmittelanteil eingesetzt.

Für polare, niedermolekulare Systeme mit geringem Lösungsmittelgehalt oder lösungsmittelfreie Systeme werden in der Regel hydrophobe Kieselsäuren verwendet. Die Hydrophobierung kann beispielsweise durch eine Funktionalisierung mit Polyorganosiloxanen (z.B. Polydimethylsiloxan, PDMS) oder Chloralkylsilanen (insbesondere Chlormethylsilanen) erfolgen, wobei die so funktionalisierten Kieselsäuren Mono-, Di- oder Trimethylsiloxy-Gruppen aufweisen.

Die Nomenklatur von Polyorganosiloxanen (kurz: Siloxane) basiert auf der Funktionalität ihrer Einheiten. Es gibt vier unterschiedliche Einheiten (Bausteine): mono-, di-, tri- und tetra-funktionell (M, D, T, Q). M-Siloxane fungieren als Kettenende. D-Siloxane dienen generell dem Aufbau linearer Ketten und cyclischer Siloxane. T- und Q-Siloxane dienen der Vernetzung von Ketten und dem Aufbau von verzweigten und hyperverzweigten Netzwerken.

Bei der Herstellung von Siloxanen unter Verwendung von difunktionellen Synthesebausteinen können cyclische Siloxane entstehen. Werden Kieselsäuren dann mit diesen Siloxanen funktionalisiert, enthalten sie die cyclischen Siloxane ebenfalls.

Bei Siloxanen, die [Me₂SiO_{2/2}]-Einheiten umfassen, entstehen insbesondere cyclische D-Siloxane wie Hexamethylcyclotrisiloxan (D3, [Me₂SiO_{2/2}]₃), Octamethylcyclotetrasiloxan (D4, [Me₂SiO_{2/2}]₄), Decamethylcyclopentasiloxan (D5 oder [Me₂SiO_{2/2}]₅) und Dodecamethylcyclohexasiloxan (D6 oder [Me₂SiO_{2/2}]₆) sowie höhere Homologe. In der europäischen Union erfüllen D4, D5 und D6 gemäß der Verordnung (EG) Nr. 1907/2006 (REACH-Verordnung) die Voraussetzungen, um als als vPvB (*engl*.: very persistent, very bioaccumalative), PBT (*engl*.: persist, bioaccumulative, toxic) und letztlich als SVHC (*engl*.: substances of very high concern) eingestuft zu werden. Die REACH-Verordnung schrieb zunächst eine Reduzierung des Gehalts an diesen D-Cyclen auf unter 1000 ppm vor. In der 15. Anpassungen der Verordnung wurde der Grenzwert dann auf 250 ppm herabgesetzt. Infolgedessen wurden Verfahren etabliert, in denen D-Siloxane mit einem niedrigen D-Cyclengehalt erzeugt werden können, entweder durch eine destillative Entfernung dieser Cyclen oder durch gezielte chemische Umsetzungen.

WO 96/18670 A1 beschreibt ein Verfahren zur Erzeugung einer im wesentlichen cyclenfreien Polyorganosiloxan-Mischung, bei der durch die Zugabe eines Äquilibrierungskatalysators die Cyclenbildung unterdrückt wird. Die Polyorganosiloxan-Mischungen können dabei auch funktionalisiert sein.

EP 1 580 215 B1 beschreibt ein Verfahren zur Herstellung von aminofunktionellen Organosiloxanen mit einem niedrigen D4-Gehalt.

Die Verwendung von T- und Q-Einheiten in Kombination mit D-Siloxanen ist ebenfalls bekannt. So beschreibt die US 4,193,885 die Verwendung von verzweigten Methylpolysiloxanen als Wärmeträger, wobei der Gehalt an T- und Q-Bausteinen bevorzugt kleiner als 10 Mol.-% ist.

Die Bildung von D-Cyclen kann vollständig ausgeschlossen werden, wenn auf die Verwendung des D-Bausteins (Me₂SiO_{2/2}) verzichtet wird.

Verfahren zur Herstellung D-freier Siloxane sind bisher auf niedermolekulare TM- (Systeme, die nur aus T- und M-Einheiten bestehen) oder QM-Systeme beschränkt und betreffen überwiegend deren Anwendungen als Wärmeträgerfluide sowie in der Kosmetik.

WO 2010/103103 A1 beschreibt die Verwendung von Polyorganosiloxanen als Kraft- und/oder Wärmeübertragungsflüssigkeit, wobei auch T- und Q-Einheiten und damit sowohl reine TM- als auch QM-Systeme zugelassen werden. Einer der Si-gebundenen Reste verfügt dabei über mindestens zwei C-Atome.

RU 2 221 826 C1 betrifft unter anderem die Verwendung von TM3 [(Me)Si(OSiMe₃)₃] als Komponente von Wärmeträgerfluiden in Mischungen mit linearen DM-Siloxanen.

WO 2016/124439 A1 beschreibt die Nutzung von QM4 [Si(OSiMe₃)₄] als Wärmeträgerfluid.

WO 2017/058713 A1 beschreibt die Nutzung von TM3 und QM4 als Komponente einer Zusammensetzung für Hautpflegeanwendungen.

Ferner sind Verfahren zur Herstellung von QM- bzw. TM-Systemen bekannt.

EP 1 205 505 A2 und EP 0 495 676 A1 beschreiben Verfahren zur Herstellung von alkoxyreichen TM-Oligomeren bzw. -Polymeren, die Q-Einheiten und ungesättigte Funktionalitäten enthalten können. WO 2018/141383 A1 beschreibt einen kontinuierlichen Prozess zur Herstellung von QM4, Q(VM2)4

[Si(OSi(Me)₂(C(H)=CH₂))₄]

und TM3.

Weitere Verfahren ermöglichen die Erzeugung von niedermolekularen QM- bzw. TM-Systemen, die mit ungesättigten oder Aminofunktionalitäten ausgestattet sind.

JP11021289 A2 beschreibt ein Verfahren zur Herstellung von 3-Aminopropyl-substituiertem TM3 sowie QM4, während EP 3 153 518 A1 Verfahren zur Herstellung von monovinyliertem TM3 sowie QM4 betrifft.

Ein alternatives Verfahren zur Erzeugung von (u.a. auch linearen) TM-Siloxanen wird in WO 2018/184668 A1 durch die Silylierung von Alkalimetallsilanolaten beschrieben. Dabei fallen allerdings stöchiometrische Mengen von Alkalimetallsalzen an.

Die Funktionalisierung von Kieselsäuren mit M-, D-, und/oder T-Gruppen ist bekannt. Diese verläuft üblicherweise als eine Kondensationsreaktion zwischen den Silanolgruppen der Kieselsäure und den M-, D-, und/oder T-Einheiten (RₙSiX, wobei X ist eine reaktive Abgangsgruppe und n = 1, 2 oder 3 ist) des Siloxans oder Organosilans.

Beispielsweise beschreibt EP 0 686 676 A1 ein Verfahren zur Silylierung von Kieselsäure mit M-, D-, und/oder T-Siloxanen. Das Siloxan wird dabei der Kieselsäuere in Form eines fein zerstäubten Aerosols zugemischt.

Auch EP 0 251 176 A2 offenbart ein Verfahren zur Herstellung einer funktionalisierten Kieselsäure, durch Umsetzen einer unfunktionalisierten Kieselsäure mit Diphenyldimethoxysilan und Trimethylmethoxysilan.

EP 0 926 210 A1 und DE 10 2006 017 592 A1 beschreiben jeweils Verfahren zur Hydrophobierung von Kieselsäuren mit Organomonosilanen, wobei die Kieselsäure mit M-, D-, und/oder T-Gruppen funktionalisiert wird.

Nachteilig bei den genannten Verfahren zur Funktionalisierung von Kieselsäuren ist, dass diese D-Cyclen enthalten können.

Die Aufgabe der Erfindung bestand darin, hydrophobe Kieselsäuren bereitzustellen, die im Wesentlichen frei von D-Cyclen sind.

Unter *im Wesentlichen* soll dabei verstanden werden, dass zumindest die Nachweisgrenze für D-Cyclen der hier angewendeten Analysemethode von 60 ppm unterschritten wird.

Diese Aufgabe wird gelöst durch eine Kieselsäure, die mit einem Siloxan der allgemeinen Formel (I)

[SiO_{4/2}]ₐ [R¹SiO_{3/2}]_{b} [R³R¹SiO_{2/2}]_{c} [R¹₃SiO_{1/2}]_{d} [O_{1/2}R²]ₑ (I)

funktionalisiert ist, wobei die Indices *a, b, c, d, e* unabhängig voneinander die ganzzahligen Werte annehmen
*a* von 0 bis 100,
*b* von 0 bis 100,
*c* von 0 bis 50,
*d* von 3 bis 200,
*e* von 0 bis 50,
mit der Maßgabe, dass die Summe aus a, b und c mindestens 1 ist und für mehr als 50 % der Siloxane in der Mischung die Summe aus a, b und c ≥ 4 ist;
wobei **R¹** unabhängig voneinander H, Aminogruppe, unsubstituierter oder substituierter C₁-C₂₀-Alkylrest, unsubstituierter oder substituierter C₂-C₂₀-Alkenylrest, unsubstituierter oder substituierter C₆-C₁₄-Arylrest ist;
wobei **R²** unabhängig voneinander H, unsubstituierter oder substituierter C₁-C₂₀-Kohlenwasserstoffrest ist;
wobei **R³** unabhängig voneinander H, Aminogruppe, unsubstituierter oder substituierter C₂-C₂₀-Alkylrest, unsubstituierter oder substituierter C₂-C₂₀-Alkenylrest, unsubstituierter oder substituierter C₆-C₁₄-Arylrest ist, wobei
substituiert bedeutet, dass unabhängig voneinander mindestens ein Substituent aus der Gruppe mit OR^{Y}, -NR^{Y}₂, -SH, -SR^{Y}, Epoxy, -COOR^{Y}, -CHO, -CN, -NCO, -OCOOR^{Y}, -NR^{Y}-COOR^{Y}, -NR^{Y}-CO-NR^{Y}, -SiR^{Y}₃ und -OSiR^{Y}₃ vorhanden ist, wobei **R^{Y}** unabhängig voneinander H, Aminogruppe, unsubstituierter oder substituierter C₁-C₂₀-Alkylrest, unsubstituierter oder substituierter C₂-C₂₀-Alkenylrest, unsubstituierter oder substituierter C₆-C₁₄-Arylrest ist.

Vorzugsweise haben die Indices a, *b, c, d,* e unabhängig voneinander folgende ganzzahligen Werte:
a von 0 bis 30,
b von 0 bis 30,
c von 0 bis 15,
d von 3 bis 60 und
e von 0 bis 15.

Bevorzugt weist das Siloxan keine Q-Einheiten auf und der Index a hat den Wert 0. Anders ausgedrückt weist die
funktionalisierte Kieselsäure vorzugsweise keine Q-Gruppen als Funktionalisierung auf.

Vorzugsweise weist das Siloxan keine D-Einheiten auf und der Index c hat den Wert 0. Mit anderen Worten weist die funktionalisierte Kieselsäure vorzugsweise keine D-Gruppen als Funktionalisierung auf.

Bevorzugt beträgt der Gehalt an D-Cyclen weniger als 250 ppmw, besonders bevorzugt weniger als 150 ppmw, insbesondere weniger als 60 ppmw. Die Bestimmung des D-Cyclengehalts kann mit Hilfe eines Gaschromatographen mit einem Flammenionisationsdetektor (GC-FID) erfolgen. Die Nachweisgrenze liegt hier üblicherweise bei 60 ppmw (vgl. Punkt 8 der Messmethoden). Generell sollte der D-Cyclengehalt nahe bei 0 oder bei 0 ppmw liegen, da das zur Funktionalisierung verwendete Siloxan im Allgemeinen frei von D-Cyclen ist und die Reaktionsbedingungen bei der Funktionalisierung die Entstehung von D-Cyclen in der Regel nicht begünstigen.

Die funktionalisierte Kieselsäure weist vorzugsweise eine Oberfläche (gemessen nach der BET-Methode nach DIN 66131 und 66132) von 30 bis 400 m²/g, besonders bevorzugt von 40 bis 300 m²/g, insbesondere von 50 bis 200 m²/g, auf.

Der Gehalt an Silanolgruppen (Rest-Silanolgehalt bezogen auf die Ausgangskieselsäure) der funktionalisierten Kieselsäure beträgt vorzugsweise 15 bis 45 % (vgl. Punkt 9 der Messmethoden).

Der Kohlenstoffgehalt der funktionalisierten Kieselsäure liegt vorzugsweise bei 1 bis 10 % (vgl. Punkt 10 der Messmethoden).

Vorzugsweise liegt der Gehalt an flüchtigen Anteilen bei 300°C der funktionalisierten Kieselsäure bei 0,5 bis 10%, besonders bevorzugt bei 2 bis 8%, insbesondere bei 3 bis 7%.

Vorzugsweise liegt der Gehalt an flüchtigen Anteilen bei 105°C der funktionalisierten Kieselsäure bei 0,1 bis 0,5%, besonders bevorzugt bei 0,2 bis 0,3% (vgl. Punkt 11 der Messmethoden).

Bevorzugt beträgt die Verdickungswirkung der funktionalisierten Kieselsäure 1 bis 10 mPas, besonders bevorzugt 2 bis 9 mPas, insbesondere 3 bis 8 mPas (vgl. Punkt 12 der Messmethoden).

Ein weiterer Aspekt der Erfindung betrifft ein Verfahren zur Herstellung einer funktionalisierten Kieselsäure, insbesondere einer Kieselsäure wie sie oben beschrieben ist, durch Umsetzen einer unfunktionalisierten Kieselsäure mit einem Siloxan der allgemeinen Formel (I)

[SiO_{4/2}]ₐ [R¹SiO_{3/2}]_{b} [R³R¹SiO_{2/2}]_{c} [R¹₃SiO_{1/2}]_{d} [O_{1/2}R²]ₑ **(I),**

wobei die Indices *a, b, c, d, e* unabhängig voneinander die ganzzahligen Werte annehmen (es gilt die oben beschriebene Maßgabe)
a von 0 bis 100,
b von 0 bis 100,
c von 0 bis 50,
d von 3 bis 200 und
e von 0 bis 50,
mit der Maßgabe, dass die Summe aus a, b und c mindestens 1 ist und für mehr als 50 % der Siloxane in der Mischung die Summe aus a, b und c ≥ 4 ist, die Reste **R¹**, **R²**, **R³** definiert sind wie oben und wobei der Gehalt an Alkoxygruppen (R² ≠ H) weniger als 5 Mol.-% und der Gehalt an Silanolgruppen (R² = H) weniger als 500 ppm beträgt und das Siloxan eine Viskosität von 5 bis 500000 mPa*s, aufweist.

Vorzugsweise nehmen die Indices a, b, c, d, e unabhängig voneinander folgende ganzzahligen Werte an:
a von 0 bis 30,
b von 0 bis 30,
c von 0 bis 15,
d von 1 bis 60 und
e von 0 bis 15,
wobei der Gehalt an Alkoxygruppen weniger als 1 Gew.-% und der Gehalt an Silanolgruppen weniger als 350 ppm beträgt und das Siloxan eine Viskosität von 60 bis 10000 mPa*s, insbesondere 50 bis 500 mPa*s, aufweist.

Die Viskosität (bei 25°C) des Siloxans verändert sich für gewöhnlich über einen Lagerzeitraum von 4 Wochen bei 25°C um weniger als 10 %, insbesondere um weniger als 5 %. Ferner ist das Siloxan generell hydrophob und bei Normalbedingungen (25°C und 1,013 bar) nicht mit Wasser mischbar.

Der Wert des Index a und/oder des Index c hat vorzugsweise den Wert 0. Insbesondere weist das Siloxan keine [R³R¹SiO_{2/2}]-Einheiten auf (c = 0) und kann in Abhängigkeit seiner Zusammensetzung als TM-, QTM- oder QM-Siloxan bezeichnet werden. Als Q/T/M-Siloxane können Siloxane (Siloxanmischungen), enthaltend TM-, QTM- und/oder QM-Siloxane, zusammengefasst werden.

Insbesondere ist das verwendete Siloxan frei von D-Cyclen.

Vorzugsweise liegt das Verhältnis des Index d zum Index b bei 0,15 bis 3, bevorzugt bei 0,2 bis 2, besonders bevorzugt bei 0,3 bis 1.

Beispiele für C₁-C₂₀-Alkylreste, als welche die Reste **R¹, R²** und **R³** des Siloxans unabhängig voneinander definiert sein können, sind:
Methyl-, Ethyl-, *n*-Propyl-, iso-Propyl-, 1-*n*-Butyl-, 2-*n*-Butyl-, iso-Butyl-, tert.-Butyl-, *n*-Pentyl-, iso-Pentyl-, neo-Pentyl-, tert.-Pentylrest, Hexylreste, wie der *n*-Hexylrest, Heptylreste, wie der *n*-Heptylrest, Octylreste, wie der n-Octylrest und iso-Octylreste, wie der 2,2,4-Trimethylpentylrest, Nonylreste, wie der *n*-Nonylrest, Decylreste, wie der n-Decylrest, Dodecylreste, wie der n-Dodecylrest, und Octadecylreste, wie der *n*-Octadecylrest; Cycloalkylreste, wie Cyclopentyl-, Cyclohexyl-, Cycloheptyl- und Methylcyclohexylreste.

Beispiele für C₆-C₁₄-Arylreste können sein Phenyl-, Naphthyl-, Anthryl- und Phenanthrylrest.

Beispiele für Arylreste können sein *o*-, *m-, p*-Tolylreste, Xylylreste und Ethylphenylreste; und Alkylreste, wie der Benzylrest, der *α*- und der *β*-Phenylethylrest.

Beispiele für C₂-C₂₀-Alkenylreste können sein Vinyl-, Allyl-, 5-Hexen-1-yl-, E-4-Hexen-1-yl-, Z-4-Hexen-1-yl-, 2-(3-Cyclohexenyl)-ethyl- und Cyclododeca-4,8-dienylrest.

Beispiele für Aminogruppen können sein:
Morpholino-(CH₂)-,
H₂N(CH₂)₂NH(CH₂)CH(CH₃)CH₂-,
(Cyclohexyl)NH(CH₂)₃-,
(Cyclohexyl)NH(CH₂)-,
CH₃NH(CH₂)₃-,
(CH₃)₂N(CH₂)₃-,
CH₃CH₂NH(CH₂)₃-,
(CH₃CH₂)₂N(CH₂)₃-,
CH₃NH(CH₂)₂NH(CH₂)₃-,
(CH₃)₂N(CH₂)NH(CH₂)₃-,
CH₃CH₂NH(CH₂)₂NH(CH₂)₃-,
(CH₃CH₂)₂N(CH₂)₂NH(CH₂)₃.

Der Rest **R^{Y}** ist vorzugsweise unabhängig voneinander ausgewählt aus der Gruppe mit 3-Aminopropyl, [N-(2-Aminoethyl)-3-aminopropyl], Methyl, Ethyl, Propyl, Butyl, 2-Butyl, tert.-Butyl, neo-Pentyl, Hexyl, Vinyl, Allyl, Hexenyl, Phenyl, Benzyl, Tolyl und Naphtyl. Insbesondere ist **R^{Y}** ausgewählt aus der Gruppe mit Methyl, Ethyl, Vinyl, Allyl, Hexenyl und Phenyl.

Vorzugsweise ist der C₁-C₂₀-Alkylrest, der C₂-C₂₀-Alkenylrest und/oder der C₆-C₁₄-Arylrest der verwendeten Siloxans nicht substituiert.

Bevorzugt ist der Rest **R²** unabhängig voneinander ein unsubstituierter C₁-C₁₂-Kohlenwasserstoffrest, besonders bevorzugt C₁-C₆-Kohlenwasserstoffrest, insbesondere Methyl oder Ethyl.

Vorzugsweise handelt es sich bei dem verwendeten Siloxan um ein Substitut für Polydimethylsiloxane (Formel A), wobei **R¹** bevorzugt unabhängig voneinander ausgewählt ist aus der Gruppe mit Methyl, Ethyl und Phenyl. **R²** ist bevorzugt unabhängig voneinander ausgewählt aus der Gruppe mit H, Methyl- und Ethyl und **R³** ist bevorzugt unabhängig voneinander Ethyl oder Phenyl.

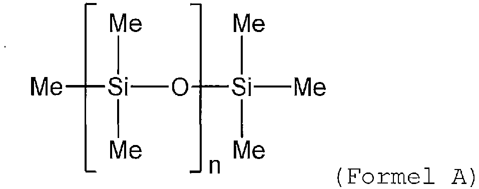

Gemäß einer weiteren Ausführungsform handelt es sich bei dem Siloxan um ein Substitut für Vinylpolysiloxane. Bei Vinylpolysiloxanen sind (angelehnt an Formel A) pro Molekül einzelne Methyl-Reste durch ungesättigte Funktionalitäten substituiert. Der Rest **R¹** ist dabei bevorzugt unabhängig voneinander ausgewählt aus der Gruppe mit Methyl, Ethyl, Phenyl, Vinyl, Allyl und Hexenyl. **R²** ist bevorzugt unabhängig voneinander ausgewählt aus der Gruppe mit H, Methyl und Ethyl. **R³** bevorzugt unabhängig voneinander ausgewählt aus der Gruppe mit Ethyl, Phenyl, Vinyl, Allyl und Hexenyl.

Gemäß einer weiteren Ausführungsform handelt es sich bei dem Siloxan um ein Substitut für Aminöle. Angelehnt an Formel A sind bei Aminölen einzelne Methyl-Reste durch Aminogruppen ersetzt. Der Rest **R¹** ist dabei vorzugsweise unabhängig voneinander ausgewählt aus der Gruppe mit Methyl, Ethyl, Phenyl, 3-Aminopropyl und [N-(2-Aminoethyl)-3-aminopropyl]. **R²** ist bevorzugt unabhängig voneinander ausgewählt aus der Gruppe mit H, Methyl und Ethyl. **R³** ist bevorzugt unabhängig voneinander ausgewählt aus der Gruppe mit Ethyl, Phenyl, 3-Aminopropyl und [N-(2-Aminoethyl)-3-aminopropyl].

Die unfunktionalisierte Kieselsäure weist vorzugsweise eine Oberfläche von 50 bis 400 m²/g (BET-Methode, s.o.) auf.

Die Umsetzung der unfunktionalisierten Kieselsäure mit dem Siloxan der allgemeinen Formel (I) erfolgt vorzugsweise bei einer Temperatur von 25 bis 400°C, besonders bevorzugt von 200 bis 400°C, insbesondere von 200 bis 350°C. Bei dieser Temperatur handelt es sich insbesondre um die Wandtemperatur des verwendeten Reaktors.

Die Umsetzung wird vorzugsweise bei Normaldruck durchgeführt.

Die unfunktionalisierte Kieselsäure wird vorzugsweise vor der Funktionalisierung mit 0,5 bis 5% (bezogen auf die Masse der Kieselsäure) eines protischen Lösungsmittels oder einer schwachen Base, vorzugsweise Ammoniak, behandelt.

Umfasst von der Erfindung ist ferner eine funktionalisierte Kieselsäure, die nach dem beschriebenen Verfahren hergestellt ist, und einen Gehalt an D-Cyclen von weniger als 250 ppmw, bevorzugt weniger als 150 ppmw, besonders bevorzugt weniger als 60 ppmw, aufweist.

Ein weiterer Aspekt der Erfindung betrifft die Verwendung der beschriebenen funktionalisierten Kieselsäuren als Additiv zur Steuerung der Rheologie von flüssigen und pulverförmigen Systemen, insbesondere von Kleb- und Dichtstoffen, von Tonern und Entwicklern.

Die zur Funktionalisierung verwendeten Siloxane mit einem Alkoxygruppen-Gehalt [O_{1/2}R²] von weniger als 3 Gew.-% können durch ein Verfahren mit den folgenden Schritten hergestellt werden:
a) Umsetzen einer Mischung, enthaltend mindestens eine Siliciumverbindung aus der Gruppe mit R¹₃SiX, R¹₃SiOR² und R¹₃SiOSiR¹₃ und mindestens eine Siliciumverbindung aus der Gruppe mit SiX₄, Si(OR²)₄, R¹SiX₃, R¹Si(OR²)₃, R³R¹SiX₂ und R³R¹Si(OR²)₂, mit einem Anteil Wasser, der mindestens 50 % der Stoffmenge der in der Mischung enthaltenen Alkoxygruppen entspricht, gegebenenfalls in Gegenwart eines Alkohols und/oder Lösungsmittels, wobei **X** unabhängig voneinander F, Cl, Br, I, Tosylat, Triflat oder Acetat ist und die Reste **R¹, R²** und **R³** definiert sind wie oben beschrieben;
b) Durchführen einer Phasenseparation zum Abtrennen einer Siloxanphase;
c) Umsetzen der Siloxanphase mit einem basischen Katalysator oder mit einem sauren Katalysator, wobei das Umsetzen mit dem sauren Katalysator in Gegenwart mindestens einer Siliciumverbindung aus der Gruppe mit R¹₃SiOSiR¹₃, R¹₃SiX und R¹₃SiOH erfolgt;
d) Abtrennen von niedermolekularen Bestandteilen zum Erhalt des Siloxans.

Vorzugsweise umfasst die Mischung im Schritt a) mindestens eine Siliciumverbindung aus der Gruppe mit R¹₃SiX, R¹₃SiOR² und R¹₃SiOSiR¹₃ und mindestens eine Siliciumverbindung aus der Gruppe mit SiX₄, Si(OR²)₄, R¹SiX₃ und R¹Si(OR²)₃₋

Bei der Reaktion im Schritt a) handelt es sich um eine Cohydrolyse, wobei diese mit einem Überschuss an Wasser (bezogen auf die für die Hydrolyse der vorhandenen Alkoxyfunktionalitäten notwendigen Wassermenge) durchgeführt wird.

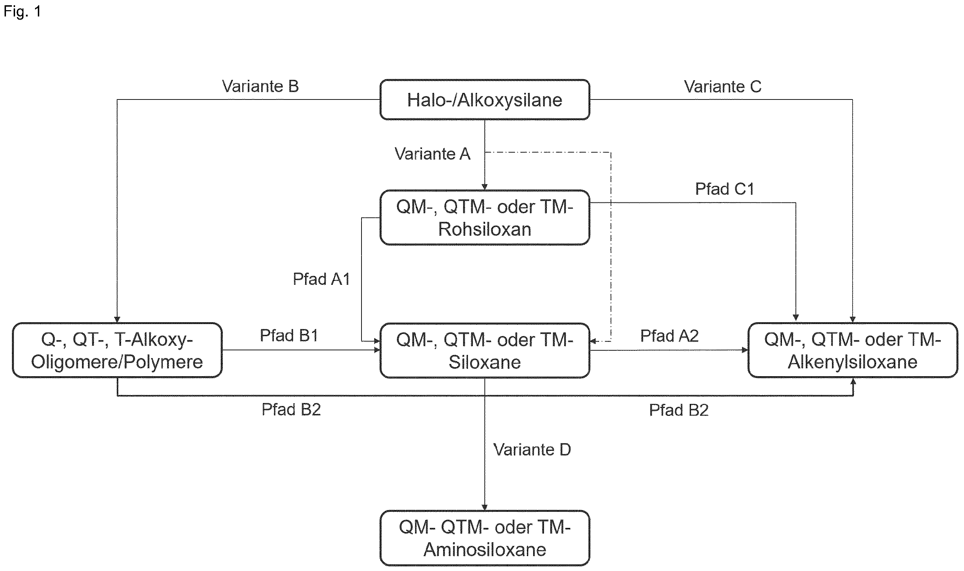

Diese Verfahrensvariante (vgl. Fig. 1, Variante A) kann in Gegenwart eines Alkohols und/oder eines Lösungsmittels durchgeführt werden, wobei es sich bei dem Alkohol bevorzugt um einen ein- oder zweiwertigen C₁-C₂₀-Alkohol handelt. Besonders bevorzugt handelt sich um einen einwertigen, unverzweigten C₁-C₆-Alkohol. Insbesondere ist der Alkohol ausgewählt aus der Gruppe mit MeOH, EtOH, Ethylenglykole, Propylenglykole und Kombinationen daraus. Der Alkohol kann gegebenenfalls auch in dem Lösungsmittel enthalten sein.

Das Lösungsmittel umfasst vorzugsweise mindestens eine Verbindung aus der Gruppe mit Alkoholen, Aliphaten und Aromaten, wobei die Verbindung 1 bis 20, bevorzugt 1 bis 12, besonders bevorzugt 1 bis 9 C-Atome, aufweist. Die Aromaten können substituiert oder unsubstituiert sein. Vorzugsweise handelt es sich um Toluol. Bei den Aliphaten handelt es sich vorzugsweise um acyclische Verbindungen, insbesondere um *n*- oder iso-Alkane. Diese können als Reinsubstanzen oder Isomerenmischung vorliegen.

Die Phasenseparation dient der Trennung des durch Cohydrolyse in Schritt a) erhaltenen (vorläufigen) Siloxans von einer wässrigen ggf. alkoholhaltigen Phase. Beispielsweise kann die Phasenseparation mit einem Scheidetrichter oder einem Doppelkolonnenverfahren mit einem Koaleszer erfolgen.

Q/T/M-Siloxane, die durch Cohydrolyse erzeugt werden, können einen hohen Gehalt an Alkoxy-Gruppen aufweisen. Dieser kann dazu führen, dass die Produkte unter Einwirkung von Luftfeuchtigkeit nicht viskositätsstabil sind. Der Alkoxy-Gehalt kann durch chemische Weiterbehandlungen reduziert werden. Die so erhaltenen Siloxane sind dann viskositätsstabil.

In Schritt c) erfolgt eine Weiterbehandlung der von der wässrigen Phase getrennten (vorläufigen) Siloxanmischung entweder unter saurer oder basischer Katalyse. Während bei der sauren Katalyse (im Beisein von (funktionellen) Disiloxanen, Halogensilanen oder Silanolen) die Alkoxy-Gruppen in -O-Si(CH₃)₂R¹-Funktionalitäten überführt werden, werden durch die basische Katalyse die Alkoxy-Gruppen in Silanole überführt, die entweder kondensieren oder weiter funktionalisiert werden können.

In Schritt d) erfolgt eine Abtrennung niedermolekularer Bestandteile insbesondere mittels Destillation, beispielsweise mittels Destillationskolonnen, Dünnschicht- bzw. Kurzwegverdampfer.

Die Molmassengrenze der abzutrennenden Bestandteile hängt von den verwendeten Bedingungen und Verbindungen ab. Beispielsweise können Methanol, Ethanol, Si2 (Formel A, wenn n=1), VSi2 [H₂C=C(H)Si(Me)₂-O-Si(Me)₂(C(H)=CH₂)], TM3 bis hin zu QM4 mittels Destillation entfernt werden. Eine Molmassengrenze, bis zu welcher Verbindungen abgetrennt werden, ist beispielsweise 1000 g/mol, bevorzugt 500 g/mol, besonders bevorzugt 400 g/mol (QM4 = 384,84 g/mol).

Eine weitere Verfahrensvariante zur Herstellung der verwendeten Siloxane umfasst die folgenden Schritte:
a) Umsetzen einer Mischung, enthaltend mindestens eine Siliciumverbindung aus der Gruppe mit SiX₄, Si(OR²)₄, R¹SiX₃, R¹Si(OR²)₃, R³R¹SiX₂ und R³R¹Si(OR²)₂, mit einem Anteil Wasser, der weniger als 50 % der Stoffmenge der in der Mischung enthaltenen Alkoxygruppen entspricht, gegebenenfalls in Gegenwart eines Alkohols und/oder Lösungsmittels, wobei **X** unabhängig voneinander F, Cl, Br, I, Tosylat, Triflat oder Acetat ist und die Reste **R¹, R²** und **R³** definiert sind wie oben beschrieben;
b) Umsetzen der in Schritt a) erhaltenen Reaktionsmischung mit einem sauren Katalysator in Gegenwart mindestens einer Siliciumverbindung aus der Gruppe mit R¹₃SiOSiR¹₃, R¹₃SiX und R¹₃SiOH;
c) Durchführung einer Phasenseparation zum Abtrennen einer Siloxanphase;
d) Abtrennen von niedermolekularen Bestandteilen unter Erhalt des Siloxans.

Die Mischung in Schritt a) umfasst vorzugsweise mindestens eine Siliciumverbindung aus der Gruppe mit SiX₄, Si(OR²)₄, R¹SiX₃ und R¹Si(OR²)₃.

Bei der Reaktion im Schritt a) handelt es sich um eine Cohydrolyse, wobei diese mit einer substöchiometrischen Menge Wasser und ohne Zusatz von M-Einheiten durchgeführt wird. Diese Variante (vgl. Fig. 1, Variante B) erlaubt die gezielte Einstellung einer mittleren Kettenlänge in Form von oligomeren bzw. polymeren Alkoxysiloxanen. Durch die Zugabe von substöchiometrischen Mengen an Wasser kann die Gefahr einer Gelierung minimiert werden, erfordert allerdings die chemische Reduktion des Alkoxygehaltes durch eine Weiterbehandlung im Schritt b), bei dem auch gezielt Funktionalitäten eingebaut werden können.

In Schritt b) erfolgt die Weiterbehandlung der Reaktionsmischung unter saurer Katalyse. Auch hier werden die Alkoxy-Gruppen in -O-Si(CH₃)₂R¹-Funktionalitäten überführt.

In Bezug auf den Alkohol, das Lösungsmittel sowie in Bezug auf die Schritte c) und d) kann auf die bisherige Beschreibung verwiesen werden.

Vorzugsweise ist bei beiden zuvor beschriebenen Verfahren **R²** unabhängig voneinander ein unsubstituierter C₁-C₁₂-Kohlenwasserstoffrest, bevorzugt C₁-C₆-Kohlenwasserstoffrest, besonders bevorzugt Methyl oder Ethyl.

Es kann bevorzugt sein, dass bei den zuvor beschriebenen Varianten A oder B (vgl. Fig. 1) **R¹** unabhängig voneinander Methyl oder Phenyl ist, wobei zwischen den Schritten b) und c) oder zwischen den Schritten c) und d) oder nach dem Schritt d) ein zusätzlicher Schritt i) durchgeführt wird, in welchem die jeweils im vorangegangenen Schritt erhaltene Mischung mit einem basischen Katalysator in Gegenwart mindestens einer Siliciumverbindung aus der Gruppe mit [R³Si(OR²)₃], [R³R¹Si(OR²)₂] und [R³₃Si(OR²)] umgesetzt wird. **R³** ist dabei ein Rest der allgemeinen Formel (II)

-R⁴-[NR⁵-R⁶-]_{g}NR⁷₂ (II).

Die Reste **R⁴, R⁵** und **R⁷** sind dabei wie folgt definiert:
**R⁴** ist ein zweiwertiger linearer oder verzweigter Kohlenwasserstoffrest mit 1 bis 18 C-Atomen.
**R⁵** und **R⁷** sind unabhängig voneinander H, Aminogruppe, unsubstituierter oder substituierter C₁-C₂₀-Alkylrest, unsubstituierter oder substituierter C₂-C₂₀-Alkenylrest, unsubstituierter oder substituierter C₆-C₁₄-Arylrest.
**R⁶** ist ein zweiwertiger Kohlenwasserstoffrest mit 1 bis 6 C-Atomen und der Index g nimmt den Wert 0, 1, 2, 3 oder 4 an.

Bei der allgemeinen Formel (II) handelt es sich um eine spezielle Auswahl aus der bereits beschriebenen allgemeinen Auswahl für **R³** (Aminoalkyl-Rest).

Bei dieser Verfahrensvariante (vgl. Fig. 1, Variante D) handelt es sich um eine weitere Nachbehandlung zur Einführung von Aminogruppen.

Vorzugsweise ist der basische Katalysator ausgewählt aus der Gruppe mit Alkalimetallhydroxid, Erdalkalimetallhydroxid, Alkalimetallalkoholat, Erdalkalimetallalkoholat, Alkalimetallsilanolat, Erdalkalimetallsilanolat, Amine, Aminoalkoxysilane und Mischungen daraus. Bei den Aminen handelt es sich bevorzugt um Alkylamine (z.B. Triethylamin), Aminosilane und/oder Aminoalkoxysilane (z.B. Aminopropylsilane, Aminoethylsilane).

Es kann ferner bevorzugt sein, dass **R¹** unabhängig voneinander Methyl oder Phenyl ist, wobei zwischen den Schritten b) und c) oder zwischen den Schritten c) und d) oder nach dem Schritt d) ein zusätzlicher Schritt ii) durchgeführt wird, in welchem die jeweils im vorangegangenen Schritt erhaltene Mischung mit einem sauren Katalysator in Gegenwart mindestens einer Siliciumverbindung aus der Gruppe mit R³₃SiOSiR³₃, R³₃SiX und R³₃SiOH umgesetzt wird. **R³** ist dabei unabhängig voneinander ein unsubstituierter C₂-C₂₀-Alkylrest, unsubstituierter oder substituierter C₂-C₂₀-Alkenylrest, unsubstituierter oder substituierter C₆-C₁₄-Arylrest. Bevorzugt ist **R³** ein Vinyl-, Allyl- oder Hexenyl-Rest.

Bei dieser Variante (vgl. Fig. 1, Variante C) handelt es sich um eine Nachbehandlung zur Einführung ungesättigter, statistisch verteilter, Funktionalitäten.

Vorzugsweise ist der saure Katalysator ausgewählt aus der Gruppe mit Halogenwasserstoffsäure, Sulfonsäure, Salpetersäure, Salpetrige Säure, Schwefelsäure, organische Säuren und Mischungen daraus. Bei den organischen Säuren handelt es bevorzugt um mindestens eine Verbindung aus der Gruppe mit Essigsäure, Trifluoressigsäure, Ameisensäure, Propionsäure, Oxalsäure, Malonsäure, Bernsteinsäure, Zitronensäure, Apfelsäure, Adipinsäure und Mischungen daraus.

Der saure und der basische Katalysator können jeweils an ein Trägermaterial gebunden sein oder als Flüssigkeit oder Gas eingesetzt werden. Beispiele für kommerziell erhältliche saure Katalysatoren sind Tonsil (saure Tonerde) oder Purolite^{®} CT269 DR (Sulfonsäure).

Vorzugsweise erfolgt die Umsetzung in Gegenwart eines sauren oder basischen Katalysators so lange, bis sich ein thermodynamisches Gleichgewicht einstellt und sich die Zusammensetzung der Mischung nicht mehr ändert.

Die Umsetzung in Gegenwart eines sauren oder basischen Katalysators kann bei einer Temperatur von 20 bis 200°C, bevorzugt von 50 bis 150°C, besonders bevorzugt von 80 bis 120°C, durchgeführt werden.

Der Verfahrensschritt a) kann bei einer Temperatur von -20 bis 200°C, besonders bevorzugt von 0 bis 150°C, insbesondere von 20 bis 120°C, durchgeführt werden.

Das Verfahren kann als Batch-Verfahren, Semibatch-Verfahren oder kontinuierliches Verfahren durchgeführt werden. Grundsätzlich kann das Verfahren oder einzelne Verfahrensschritte unabhängig voneinander unter vermindertem oder unter erhöhtem Druck durchgeführt werden. Der Druck liegt bevorzugt in einem Bereich von 1 bis 10000 kPa, besonders bevorzugt in einem Bereich von 10 bar bis 1000 kPa. Insbesondere wird das Verfahren bei Umgebungsdruck durchgeführt.

Das wie beschrieben hergestellte Siloxan erfüllt die Bedingungen gemäß der Verordnung (EG) Nr. 1907/2006 (REACH-Verordnung), um als Polymer klassifiziert zu werden. Demgemäß verfügen die Siloxane über ein Molmassenverteilung, in der keine Einzelkomponente mit einem Gehalt von größer 50% enthalten ist. Zudem erfüllen sie die sogenannte (3n+1)-Regel, nach der mehr als 50% der im Siloxan enthaltenen Moleküle über eine Kettenlänge von ≥ 4 verfügen, bzw. eine Kettenlänge von mindestens 3 besitzen und kovalent an einen Reaktanden gebunden sind.

Die TM-, QTM- und QM-Siloxane besitzen chem.-phys. Eigenschaften, die sich, bei gleicher Viskosität bei Raumtemperatur, in Teilen deutlich von den DM-Siloxanen unterscheiden (insbesondere bezogen auf die Kettenlänge, der Tieftemperaturviskosität und der Glasübergangstemperatur), in anderen Teilen sich aber ähnlich sind (Brechungsindex, Oberflächenspannung), wie Tabelle 1 zeigt.

**Tabelle 1: *Sofern nicht anders angegeben, beziehen sich die Messgrößen auf 25°C. Das QTM-Siloxan besteht aus äquimolaren Anteilen Q- und T-Einheiten.**

| Messgrößen* | DM-Siloxan | TM-Siloxan | QTM-Siloxan | QM-Siloxan |
|---|---|---|---|---|
| Viskosität bei 25°C [mPa·s] | 100 | 100 | 100 | 100 |
| Mittlere Kettenlänge (aus M_{N} der GPC ermittelt) | 70 | 7 | 3-4 | 2-3 |
| Viskosität bei -30°C [mPa·s] | ∼400 | ∼11.000 | ∼1.400 | ∼1.200 |
| Glasübergangstemperatur [°C] | -125, 6 | -79,1 | -94,5 | -119,1 |
| Oberflächenspannung [mN/m] | 20,5 | 20,1 | 19,8 | 19,1 |
| Dichte [g/l] | 0,963 | 1,026 | 1,015 | 0,941 |
| Brechungsindex | 1,401 | 1,407 | 1,404 | 1,402 |

Die Siloxane können je nach Wahl der funktionellen Gruppen, in einem breiten Applikationsspektrum als Substitute für Polydimethylsiloxane, D-basierte Vinylpolymere und D-basierte Aminöle verwendet werden.

Polydimethylsiloxan-Substitute können eingesetzt werden als Dämpfungsmedium, Hydrauliköl, flüssiges Dielektrikum (z.B. als Transformatorflüssigkeit), Hydrophobierungsmittel (insbesondere in den Bereichen Autopflege und Textil), Antischaummittel, Pflegezusatzmittel (sowohl in den Bereichen Personal als auch Household Care), Schmiermittel, Trennmittel, Weichmacher oder Wärmeträgerflüssigkeit im Niedrigtemperaturbereich.

Die Substitute für D-basierte Vinylpolymere können eingesetzt werden für Beschichtungsmassen (z.B. Papierbeschichtungen), als Controlled-Release-Additive, als Komponente bei der Erzeugung von Elastomeren oder als Ausgangsstoffe für weitergehende Funktionalisierungen über Hydrosilylierungen und Epoxydierungen.

Die Substitute für D-basierte Aminöle können in den Bereichen Autopflegemittel, Trennmittel, Textil, Personal/Household Care sowie im Bautenschutz eingesetzt werden.

**Fig. 1** zeigt ein Schema der verschiedenen Verfahrensvarianten zur Herstellung von D-Cyclen-freien Siloxanen.

### Beispiele

### Reagenzien

Tetrachlorsilan (CAS: 10026-04-7), Trichlormethylsilan (CAS: 75-79-6), Chlortrimethylsilan (CAS: 75-77-4), Trimethoxymethylsilan (CAS: 1185-55-3), Tetramethoxysilan (CAS: 681-84-5), Hexamethyldisiloxan (CAS: 107-46-0), 1,1,3,3-Dimethyl-1,3-di-vinyldisiloxan (CAS: 2627-95-4), 3-Aminopropyltrimethoxysilan (CAS: 13822-56-5) sowie N-(2-Aminoethyl)-3-aminopropyltrimethoxysilan (AS1, CAS: 1760-24-3) wurden von der Fa. Sigma-Aldrich bezogen. Tonsil^{®} wurde von der Fa. Clariant und Purolite^{®} CT269 DR wurde von der Fa. Purolite erworben.

### Messmethoden

1) Die Viskosität wurde mit einem Stabinger Rotationsviskosimeter SVM3000 der Fa. Anton Paar bei 25°C und in einem Temperaturbereich von -40 bis 90°C durchgeführt.
2) Die massenmittlere Molmasse M_{w} kann ebenso wie die zahlenmittlere Molmassen Mₙ mittels Size Exclusion Chromatography (SEC) gegen Polydimethylsiloxan-Standards in Toluol bei 35°C, Flow Rate 0,7 ml/min und Detektion mit RI (Brechungsindex-Detektor) auf einem Säulenset Meso Pore - Oligo Pore (Fa. Agilent, Deutschland) mit einem Injektionsvolumen von 10 µl bestimmt werden.
3) Die Bestimmung des Anteils an Q-, T- und M-Einheiten der Siloxanmischung erfolgte mittels Kernresonanzspektroskopie (²⁹Si-NMR; Bruker Avance III HD 500 (²⁹Si: 99.4 MHz) Spektrometer mit BBO 500 MHz S2 Probenkopf; inverse gated-Pulssequenz (NS = 3000). 150 mg Q/T/M-Siloxanmischung wurden in 500 µl einer 4*10⁻² molaren Lösung von Cr(acac)₃ in CD₂Cl₂ aufgenommen. Die Bestimmung des Anteils weiterer Funktionalitäten erfolgte über die Korrelation der ²⁹Si-NMR-Daten mit den Integralen aus den ¹H-NMR Spektrum (¹H-NMR; Bruker Avance III HD 500 (¹H: 500.2 MHz) Spektrometer mit BBO 500 MHz S2 Probenkopf). 50 mg Q/T/M-Siloxanmischung wurden in 500 µl CD₂Cl₂ aufgenommen.
4) Der Alkoxy-Gehalt wurde durch eine Kombination von ²⁹Si-sowie ¹H-NMR-Spektroskopie ermittelt (vgl. Punkt 3). Aus den ²⁹Si-NMR-Spektren können die prozentualen Anteile von Q-, T- und M-Einheiten ermittelt werden. Unter Berücksichtigung von etwaigen Signalüberlagerungen (z.B. der Si-Me-Einheiten von *Me*SiO_{3/2}-Gruppen oder *Me*₃SiO_{1/2}-Gruppen) können die relativen Verhältnisse aus dem ²⁹Si-NMR-Spektrum auf die Verhältnisse aus dem ¹H-NMR-Spektrum übertragen werden. Auf diese Weise wurde der relative Anteil aller Funktionalitäten (Q-, T-, M-Einheiten, Alkoxy-Gruppen, ungesättigte Funktionalitäten, AminFunktionalitäten etc.) bestimmt. Die relativen Anteile der beobachteten Spezies werden mit den jeweiligen Molmassen der zugehörigen Fragmente multipliziert. Die so ermittelten Einzelmassen werden mit der Summe aller Einzelmassen ins Verhältnis gesetzt. Die Einzelmasse der Alkoxy-Gruppen im Verhältnis zur Summe aller Einzelmassen, multipliziert mit einem Faktor 100, ergibt den Alkoxy-Gehalt der Probe in Gewichtsprozent.
5) Die mittlere Summenformel wurde durch eine Kombination aus NMR-Spektroskopie (vgl. Punkt 3) und Gelpermeationschromatographie (GPC, vgl. Punkt 2) bestimmt. Aus den ²⁹Si-NMR-Spektren können die relativen molaren Anteile von Q-, T-, und M-Einheiten ermittelt werden. Unter Berücksichtigung von etwaigen Signalüberlagerungen (z.B. der Si-Me-Einheiten von *Me*SiO_{3/2}-Gruppen oder *Me*₃SiO_{1/2}-Gruppen) können die relativen Verhältnisse aus dem ²⁹Si-NMR-Spektrum auf die Verhältnisse aus dem ¹H-NMR-Spektrum übertragen werden. Auf diese Weise wurde der relative Anteil aller Funktionalitäten (Q-, T-, und M-Einheiten, Alkoxy-Gruppen, ungesättigte Funktionalitäten, AminFunktionalitäten etc.) bestimmt. Die so erhaltenen relativen Anteile werden als relative Summenformel bezeichnet. Die relativen Anteile der beobachteten Spezies werden mit den jeweiligen Molmassen der zugehörigen Fragmente multipliziert. Die so erhaltene Gesamtmasse wird als relative Gesamtmasse bezeichnet. Gemäß Punkt 2 wurde von der zu untersuchenden Probe mittels GPC die zahlenmittlere Molmasse M_{N} bestimmt. Anschließend wird der Faktor bestimmt, der notwendig ist, um die relative Molmasse in die zahlenmittlere Molmasse zu überführen. Die relativen Anteile werden mit diesem Faktor multipliziert. Auf diese Weise wird die relative Summenformel in die mittlere Summenformel überführt.
6) Der Gehalt an ungesättigten Funktionalitäten in den Vinylpolymersubstituten auf Q/T/M-Basis wird über die Iodzahl nach *Wijs* angegeben. Die Messung erfolgt dabei nach DIN 53241.
7) Die Aminzahl gibt an, wieviel mmol KOH einem Gramm der zu bestimmenden Substanz äquivalent sind. Die Bestimmung der Aminzahl erfolgt nach DIN 16945-Version 1989-03.
8) Der Gehalt an D-Cyclen wird mit Hilfe eines Gaschromatographen mit einem Flammenionisationsdetektor (GC-FID) bestimmt (CES-Silicones Europe, April 16, 2013 (Revised Version: January 10, 2019). Die Nachweisgrenze liegt hier üblicherweise bei 60 ppmw.
9) Die Bestimmung des Gehalts an Silanolgruppen kann durch Titration mit 0.1 n Natriumhydroxidlösung in gesättigter Kochsalzlösung erfolgen (Sears et al., Anal. Chem. 1956, 12. 1981). Bei Kieselsäuren wird im Allgemeinen die Sorptionskapazität für Hydroxylionen (OH⁻) erfasst. Die relative Sorptionskapazität kann dann definiert werden als die Sorptionskapazität der untersuchten Kieselsäure dividiert durch die Sorptionskapazität der hydrophilen Ausgangskieselsäure multipliziert mit 100.
10) Die Bestimmung des Kohlenstoffgehalts erfolgt im Sauerstoffstrom bei Temperaturen > 1000°C, wobei aus den Verbrennungsgasen mittels Mikroprozessors der C-Gehalt ermittelt wird (CS 530, Fa. Eltra oder SC144DR, Fa. Leco).
11) Die Bestimmung des Gehalts an flüchtigen Anteilen der funktionalisierten Kieselsäure bei 105°C und 300°C erfolgt nach DIN ISO 787/2.
12) Die Bestimmung der Verdickungswirkung der funktionalisierten Kieselsäuren erfolgt bei 25°C in einem Polyesterharz mit einem Rotationsviskosimeter nach DIN 53019.

### Beispiel 1 bis 3: Herstellung D-Cyclen-freier, hydrophober Kieselsäuren durch Funktionalisierung pyrogener Kieselsäuren mit T/M-Siloxan

Es wurden 3 pyrogene Kieselsäuren (HDK^{®} V15A, HDK^{®} N20, HDK^{®} T30, Fa. Wacker Chemie AG) eingesetzt, deren Eigenschaften Tabelle 2 zu entnehmen sind. Für die Funktionalisierung wurde ein T/M-Siloxan (S250) mit einer Viskosität von 250 mPa*s und einem Rest-Methoxy-Gehalt von 0,03 Gew.-% eingesetzt.

**Tabelle 2: eingesetzte Kieselsäuren und Siloxan**

| Bsp.-Nr. | Kieselsäure | Oberfläche Kieselsäure [m²/g] | Masse S250 [g] |
|---|---|---|---|
| 1 | HDK^{®} V15A | 150 | 18 |
| 2 | HDK^{®} N20 | 200 | 32 |
| 3 | HDK^{®} T30 | 300 | 48 |

Allgemeiner Versuchsaufbau zur Funktionalisierung:
In einem 6 L-Reaktor (Quarzglas) mit Rührer wurden 100 g der Kieselsäure unter Schutzgas (Argon) für 15 min bei 800 rpm fluidisiert. Bei unveränderter Drehzahl wurde von oben über eine Kreisel-Nebeldüse (Modell 121, Bohrung 0,2 mm, 30° Kegel, Fa. Schlick) das T/M-Siloxan (S250) mit Hilfe einer Zahnradpumpe (MCP-Z, Fa. Ismatec, Pumpenkopf Z-1830), innerhalb von 15 min im Stickstoffstrom gegen 0,6 MPa zugeführt. Nach 15-minütiger Homogenisierung wurde der Reaktor auf 300°C aufgeheizt und diese Temperatur mit einer Mantelheizung für 2 h gehalten. Für die letzten 30 min der Heizdauer wurde von Argon-Überlagerung auf Stickstoffspülung (100 L/h) umgestellt, um flüchtige Bestandteile über ein Steigrohr auszutreiben.

Die erhaltenen funktionalisierten Kieselsäuren wurden hinsichtlich ihres Gehalts an Kohlenstoff, der flüchtigen Anteile bei 105°C und bei 300°C sowie Rest-Silanol-Gehalt und Verdickungswirkung in Polyesterharz (rheologische Eigenschaften) analysiert. Die Ergebnisse sind in Tabelle 3 zusammengestellt.

**Tabelle 3: Analyseergebnisse der funktionalisierten Kieselsäuren**

| Bsp. - Nr. | Fl. Anteile 105°C [%] | Fl. Anteile 300°C [%] | C-Gehalt [%] | Rest-Silanol-Gehalt [%] | Verdickungswirkung Polyesterharz [mPas] |
|---|---|---|---|---|---|
| 1 | 0 | 1,1 | 3,4 | 17,6 | 7 |
| 2 | 0,2 | 5,5 | 6,5 | 19,3 | 8,7 |
| 3 | 0,3 | 7,5 | 8,4 | 21,0 | 6,1 |

Die rheologischen Eigenschaften wurden getestet, indem die funktionalisierte Kieselsäure in Epoxidharz dispergiert wird. Nach einem Tag Lagerung wird die Viskosität der Mischung bei einer Scherrate von 0,1 s⁻¹ und 10 s⁻¹ und 25°C ermittelt. Durch Dividieren der Viskosität bei niedriger Scherrate durch die Viskosität bei hoher Scherrate, erhält man den Thixotropie-Index. Der Thixotropie-Index wurde für zwei Epoxidharzsysteme ermittelt:
Epoxidharzsystem 1:
   Mischung aus 8 Mol-% der funktionalisierten Kieselsäure und 92 Mol-% Epoxidharz (Epikote^{™} Resin 828 (Epoxidharz auf der Basis von Bisphenol A und Epichlorohydrin), Fa. Hexion).
Epoxidharzsystem 2:
   Mischung aus 8 Mol-% der funktionalisierten Kieselsäure (gemäß Bsp. 1-3) in Epoxidharz (Epikote^{™} Resin 828) und 4 Mol-% HDK^{®} N20 (pyrogene Kieselsäure mit einer spezifischen Oberfläche von 200 m²/g) in Aminhärter (Epikure^{™} Curing Agent MGS^{®} RIMH-137, Fa. Hexion), wobei das Mischungsverhältnis 79 Mol-% Epoxidharz zu 21 Mol-% Aminhärter beträgt. Zum Vergleich wurde eine herkömmliche, kommerziell erhältliche, funktionalisierte Kieselsäure (HDK^{®} H17) untersucht. Die Thixotropie-Indices der funktionalisierten Kieselsäuren sind in Tabelle 4 gezeigt.

**Tabelle 4: Rheologische Untersuchung**

| Bsp.-Nr. | Thixotropie-Index in Epoxidharzsystem 1 | Thixotropie-Index in Epoxidharzsystem 2 |
|---|---|---|
| 1 | 34 | 48 |
| 2 | 42 | 56 |
| 3 | 34 | 54 |
| HDK^{®} H17 | 40 | 52 |

Die erfindungsgemäß modifizierten Kieselsäuren besitzen Scherverdickungen, die mit dem kommerziellen Produkt HDK^{®} H17 vergleichbar sind.

Für keine der funktionalisierten Kieselsäuren gemäß den Beispielen 1 bis 3 konnten D-Cyclen nachgewiesen werden. Die Analyse der Vergleichskieselsäure HDK^{®} H17 ergab 220 ppm D5 und 70 ppm D6.

### Beispiel 4 bis 6: Herstellung D-Cyclen-freier, teil-hydrophober Kieselsäuren durch Funktionalisierung pyrogener Kieselsäuren mit T/M-Siloxan

Es wurden die drei pyrogene Kieselsäuren HDK^{®} V15A, HDK^{®} N20, HDK^{®} T30Fa. Wacker Chemie AG) eingesetzt, deren Eigenschaften Tabelle 5 zu entnehmen sind. Die Funktionalisierung erfolgte mit dem T/M-Siloxan S250.

**Tabelle 5: eingesetzte Kieselsäuren und Siloxan**

| Bsp.-Nr. | Kieselsäure | Oberfläche Kieselsäure [m²/g] | Masse S250 [g] |
|---|---|---|---|
| 4 | HDK^{®} V15A | 150 | 7,5 |
| 5 | HDK^{®} N20 | 200 | 13 |
| 6 | HDK^{®} T30 | 300 | 19,5 |

Der Versuchsaufbau und die Durchführung erfolgten in Analogie zu den Beispielen 1 bis 3.

Die erhaltenen funktionalisierten Kieselsäuren wurden hinsichtlich ihres Gehalts an Kohlenstoff, der flüchtigen Anteile bei 105°C und bei 300°C sowie ihres Rest-Silanol-Gehalts und der Verdickungswirkung in Polyesterharz (rheologische Eigenschaften) analysiert. Die Ergebnisse sind in der Tabelle 6 zusammengefasst.

**Tabelle 6: Analyseergebnisse der funktionalisierten Kieselsäuren**

| Bsp. - Nr. | Fl. Anteile 105°C [%] | Fl. Anteile 300°C [%] | c-Gehalt [%] | Rest-Silanol-Gehalt [%] | Verdickungswirkung Polyesterharz. [mPas] |
|---|---|---|---|---|---|
| 4 | 0,3 | 1 | 1,9 | 35,2 | 3,6 |
| 5 | 0,3 | 0,8 | 3 | 29,5 | 5,2 |
| 6 | 0,4 | 6,4 | 4,4 | 40,3 | 4,8 |

Die Synthese des zur Funktionalisierung verwendeten D-Cyclen-freien T/M-Siloxans S250 erfolgte in einem mit KPG-Rührer, 1L-Tropftrichter und Olive ausgestattetem 4L-Dreihalskolben. Der Kolben wird mit 2 Sicherheitswaschflaschen sowie einer mit einer 25%-igen wässrigen NaOH-Lösung befüllten Abgaswaschflasche verbunden. Vor der Befüllung der Apparatur wird diese mit Argon geflutet. Im Kolben wird ein Gemisch aus 1089 g Methanol und 592 g Hexamethyldisiloxan vorgelegt und auf 0°C gekühlt. Bei dieser Temperatur werden über einen Zeitraum von 4 h insgesamt 1335 g Methyltrichlorsilan über den Tropftrichter zugegeben und das Gemisch auf 50°C erwärmt. Bei dieser Temperatur werden 602 g VE-Wasser über einen Zeitraum von 3 h über den Tropftrichter zugegeben. Das Gemisch wird anschließend auf Raumtemperatur (RT) gebraucht und für 10 h gerührt. Die Siloxanphase wird über einen Scheidetrichter von der wässrigmethanolischen Phase abgetrennt, mit einer gesättigten Natriumhydrogencarbonat-Lösung neutralisiert und über Natriumsulfat getrocknet. Nach erfolgter Filtration (Faltenfilter) werden an einem Rotationsverdampfer bei 80°C und 10 mbar ein Großteil der niedermolekularen Bestandteile entfernt. Das erhaltene Material ist eine farblose Flüssigkeit mit einer Viskosität von 64 mPa*s und einem Rest-Methoxy-Gehalt von 0,03 Gew.-%. Anschließend werden weitere niedermolekulare Bestandteile (insb. TM3) an einem Labordünnschichter bei 160°C und 10 mbar entfernt. Das erhaltene Produkt ist eine farblose Flüssigkeit mit einer Viskosität von 250 mPa*s und einem Rest-Methoxy-Gehalt von 0,03 Gew.-%.

### Herstellung weiterer D-Cyclen-freier Siloxane: Allgemeiner Aufbau der Apparatur zur Cohydrolyse von Halogensilanen bzw. Alkoxysilanen

Ein 4L-Dreihalskolben wird mit einem KPG-Rührer, einem 1L-Tropftrichter mit Druckausgleich und einer Olive ausgestattet. Für die Varianten A, B und C wird der Kolben mit zwei Sicherheitswaschflaschen sowie einer mit NaOH befüllten Abgaswaschflasche verbunden. Reaktionsträge Reagenzien und Lösungsmittel (z.B. Hexamethyldisiloxan und Methanol) werden, falls nicht anders beschrieben, im Kolben vorgelegt. Vor der Befüllung der Apparatur mit den entsprechenden Chlorsilanen wird die gesamte Apparatur mit Argon geflutet.

In der Figur 1 sind die verschiedenen Verfahrensvarianten anhand eines Fließschemas dargestellt. Nachfolgend wird zunächst der zugrundeliegende Reaktionsaufbau zur Durchführung der Verfahrensvarianten allgemein beschrieben. Anschließend erfolgt eine Erläuterung der Varianten A, B, C und D.

### Wahl der Edukte

Als Edukte für Variante A können Halogensilane, Alkoxysilane, Disiloxane oder Gemische hiervon verwendet werden. Für Variante C wird dieser Mischung noch mindestens ein Vinylhalogensilan, Vinylalkoxysilan oder Vinyldisiloxan hinzugefügt. Für Variante B wird bei der Hydrolyse auf die Verwendung von M-Quellen verzichtet. Bei den Varianten A und C wird ein Überschuss an Wasser, bezogen auf die zur Hydrolyse aller in der Mischung enthaltener Alkoxy- und Halogenfunktionalitäten notwendige Wassermenge, verwendet. Bei Variante B wird ein Unterschuss an Wasser verwendet.

Die Cohydrolysen (Variante A, B oder C) können ausgehend von Chlorsilanen oder Methoxysilanen oder Mischungen daraus erfolgen. Nach der Cohydrolyse erfolgt bei den Varianten A und C die Phasenseparation. Die Siloxanphase wird anschließend neutralisiert, über Natriumsulfat für 2 h getrocknet und durch Filtration isoliert. Bei Variante B wird das Hydrolyseprodukt ohne weitere Aufarbeitung verwendet.

Die Produkte aus den Varianten A und B zeichnen sich in der Regel durch einen Rest-Alkoxy-Gehalt von > 3 Gew.-% aus. Dieser kann durch Nachbehandlungen (Pfade A1, B1, B2, C1) reduziert werden. Sollte nach Variante A oder C der Rest-Alkoxy-Gehalt bereits im gewünschten Bereich liegen, erfolgt keine Nachbehandlung.

### Nachbehandlung mit Purolite^{®} CT269 DR (im Beisein eines (ggf. funktionalisierten) Disiloxans; Pfade A1, A2, B1, B2 und C1)

Ein 1L-Einhalskolben (ausgestattet mit einem Rückflusskühler) wird mit dem zu behandelndem Siloxan, 7 Gew.-% Purolite^{®} CT269 DR (bezogen auf die Siloxan-Einwaage), sowie der 10-fachen molaren Menge an Hexamethyldisiloxan, 1,1,3,3-Dimethyl-1,3-divinyldisiloxan oder Gemischen hiervon (bezogen auf den im Siloxan enthaltenen Rest-Alkoxy-Gehalt) befüllt. Die Mischung wird unter intensivem Rühren für 2 h auf 100°C erwärmt, auf RT gebracht und anschließend mittels Faltenfilter (für niedrigviskose Siloxane) oder Glasfilter bzw. Glasfritten mit Absaugflasche (für hochviskose Siloxane) isoliert. Bei Siloxanen mit hohem Rest-Alkoxy-Gehalt (von 15 bis 30 Mol.-%) nach der Cohydrolyse, wird kann der Katalysatorgehalt auf 14 Gew.-% erhöht. Durch diese Nachbehandlung kann der Gehalt an TM-, QTM- sowie QM-Cyclen in den Siloxanen reduziert werden.

### Nachbehandlung mit Tonsil^{®} (im Beisein eines (ggf. funktionalisierten) Disiloxans; Pfade A1, A2, B1, B2 und C1)

Ein 1L-Dreihalskolben (ausgestattet mit einem Rückflusskühler) wird mit dem zu behandelndem Siloxan, 10 Gew.-% Tonsil^{®} (bezogen auf die Siloxan-Einwaage), sowie der 10-fachen molaren Menge an Hexamethyldisiloxan, 1,1,3,3-Dimethyl-1,3-divinyl-disiloxan oder Gemischen hiervon (bezogen auf den im Siloxan enthaltenen Rest-Alkoxy-Gehalt) befüllt. Die Mischung wird unter Rühren für insgesamt 12 h auf 100°C erwärmt, auf RT gebracht und anschließend mittels Faltenfilter (für niedrigviskose Fluide) oder Glasfilter bzw. Glasfritten mit Absaugflasche (für hochviskose Fluide) isoliert.

### Nachbehandlung mit HCl (im Beisein eines (ggf. funktionaliserten) Disiloxans; Pfade A1, A2, B1, B2 und C1)

In einen Edelstahl-Autoklaven (1 L Gesamtvolumen, mit analogem und digitalem Druckaufnehmer und Widerstands-Mantelheizung mit Temperaturfühler) werden 600 mL eins Gemisches aus dem zu behandelndem Siloxan sowie der 10-fachen molaren Menge an Hexamethyldisiloxan, 1,1,3,3-Dimethyl-1,3-divinyldisiloxan oder Gemischen hiervon (bezogen auf den im Siloxan enthaltenen Rest-Alkoxy-Gehalt) gegeben. Der Autoklav wird gasdicht verschlossen und entgast (20 mbar für 3 min) und mit 15 g ChlorwasserstoffGas befüllt. Der Autoklav wird für 3 h auf 100°C aufgeheizt und anschließend auf RT gebracht. Die Gasatmosphäre wird durch einen Gaswäscher geleitet und der Gasraum für 5 min mit Argon gespült. Die Siloxanphase wird von der alkoholischen Phase getrennt, neutralisiert, und über Natriumsulfat für 2 h getrocknet und filtriert.

### Nachbehandlung mit KOH (Pfad A1)

Ein 1L-Einhalskolben (ausgestattet mit einem Rückflusskühler) wird mit dem zu behandelndem Siloxan sowie der äquimolaren Menge an KOH-Granulat (bezogen auf den im Siloxan enthaltenen Rest-Alkoxy-Gehalt) befüllt. Die Mischung wird unter Rühren für 2 h auf 100°C erwärmt und anschließend auf RT gebracht. Die Silikonphase wird mit Salzsäure (1 mol/l) neutralisiert und durch Filtration von anhaftenden Feststoffen befreit. Die Siloxanphase wird mit VE-Wasser gewaschen und anschließend für 2 h über Natriumsulfat getrocknet. Diese Nachbehandlung kann insbesondere zur Reduktion des Cyclengehaltes von Q/T/M-Siloxanen verwendet werden. Materialien, die dieser Nachbehandlung unterzogen werden, besitzen auch nach erfolgter Neutralisation einen Rest-Hydroxy-Gehalt, der mit zunehmender Lagerdauer zu steigenden Viskositäten führt. Um viskositätsstabile Materialien zu erhalten, kann anschließend eine Nachbehandlung mit einem sauren Katalysator wie beschrieben durchgeführt werden. Die Viskositätsänderungen im Siloxan durch diese Nachbehandlung können erheblich sein, und im Falle von TM-Siloxanen ist für gewöhnlich eine Restrukturierung feststellbar.

Nach jedem der zuvor genannten Reaktionsschritte können niedermolekulare Bestandteile wie Methanol, Ethanol, Hexamethyldisiloxan, Tetrakis(trimethylsiloxy)silan (QM4) wie Tris(trimethylsiloxy)methylsilan (TM3) an einem Rotationsverdampfer oder Dünnschichter/Kurzwegverdampfer quantitativ entfernt werden.

### Behandlungen mit NaOMe im Beisein eines Aminoalkoxysilans (Variante D)

In einem 1L-Rundhalskolbem mit Rückflusskühler wird das zu behandelte Siloxan mit einem Aminoalkoxysilan und 500 Gew.-ppm (bezogen auf die Gesamteinwaage) einer Natriummethylat-Lösung (20 Gew.-% in Methanol) gemischt. Unter Rühren wird das Gemisch für 2 h auf 90°C erwärmt. Die Umsetzung wird mittels ²⁹Si NMR-Spektroskopie kontrolliert.

### Reaktionssequenzen

Nach erfolgter Cohydrolyse (gemäß Variante A) werden Rohsiloxane erhalten, die einen Rest-Alkoxy-Gehalt aufweisen. Ist dieser außerhalb des gewünschten Bereiches kann dieser durch Nachbehandlungen unter Verwendung eines sauren oder basischen Katalysators reduziert werden (Pfad A1). Ist der Rest-Alkoxy-Gehalt bereits im gewünschten Bereich, erfolgt keine Nachbehandlung.

Die Siloxane können in Folgeschritten in Alkenylsiloxane (Nachbehandlung mit einem sauren Katalysator unter Verwendung von z.B. 1,1,3,3-Tetramethyl-1,3-Divinyldisiloxan, Pfad A2) oder Aminosiloxane (Nachbehandlung mit NaOMe im Beisein eines Aminoalkoxysilans) umgesetzt werden. Darüber hinaus kann der Einbau von ungesättigten Funktionalitäten mit der Reduktion des Rest-Alkoxy-Gehaltes gekoppelt werden (Pfad C1).

Nach erfolgter Teilhydrolyse gemäß Variante B werden Q-, QT- oder T-Alkoxy-Oligomere/Polymere erhalten, M-Einheiten werden bei der Hydrolyse nicht verwendet. Im Rahmen einer Nachbehandlung mit einem sauren Katalysator unter Verwendung von z.B. Hexamethyldisiloxan (Pfad B1), 1,1,3,3-Dimethyl-1,3-di-vinyldisiloxan oder Gemischen hiervon (Pfad B2) werden die (Alkenyl-)Siloxane erzeugt.

Eine Zusammenfassung der in den Beispielen verwendeten Edukte und deren Einwaagen zur Erzeugung der Rohsiloxane (ohne Vinyl- oder Aminfunktionalitäten) ist der Tabelle 8 zu entnehmen.

**Tabelle 8: *Als Säure wurde konz. Salzsäure (32 Gew.-%) verwendet. Säure und VE-Wasser wurden vor der Dosierung gemischt und durch intensives Rühren für 5 min homogenisiert.**

| Bsp | Einwaage Alkohol [g] | Einwaage [Me₃SiO_{1/2}]-Quelle [g] | Einwaage [MeSiO_{3/2}]-Quelle [g] | Einwaage [SiO_{4/2}]-Quelle [g] | Einwaage VE-Wasser [g] | Temp. A und B [°C] |
|---|---|---|---|---|---|---|
| 7 | EtOH, 756 | Me₃SiCl, 254 | MeSiCl₃, 582 | - | 252 | 0; RT |
| 8 | MeOH, 1027 | [Me₃SiO_{1/2}]₂, 568 | MeSiCl₃, 1281 | - | 577 | 0; 50 |
| 9 | MeOH, 1001 | [Me₃Si0_{1/2}]₂, 785 | MeSiCl₃, 506 | SiCl₄, 581 | 563 | 0; 50 |
| 10 | MeOH, 1254 | [Me₃SiO_{1/2}]₂, 983 | MeSiCl₃, 633 | SiCl₄, 727 | 705 | 0; 50 |
| 11 | MeOH, 1013 | [Me₃SiO_{1/2}]₂, 1064 | - | SiCl₄, 958 | 570 | 0; 50 |
| 12 | MeOH, 1091 | [Me₃SiO_{1/2}]₂, 942 | - | SiCl₄, 1084 | 613 | 0; 50 |
| 13 | - | [Me₃SiO_{1/2}]₂, 72 | MeSi(OMe)₃, 500 | - | 80 (+54g HCl)* | 50 |
| 14 | - | - | MeSi(OMe)₃, 1500 | - | 245 (+15g HCl)* | 50 |
| 15 | MeOH, 1089 | [Me₃SiO_{1/2}]₂, 592 | MeSiCl₃, 1335 | - | 601 | 0; 50 |
| 16 | - | | MeSi(OMe)₃, 1500 | - | 220 (+6g HCl)* | 50 |
| 17 | MeOH, 1088 | [Me₃SiO_{1/2}]₂, 853 | MeSiCl₃, 550 | SiCl₄, 631 | 612 | 0; 50 |
| 18 | MeOH, 1070 | [Me₃SiO_{1/2}]₂, 1085 | - | SiCl₄, 1022 | 601 | 0; 50 |

Eine Zusammenfassung der analytischen Daten der Siloxane vor bzw. nach der Nachbehandlung ist der Tabelle 9 zu entnehmen.

**Tabelle 9: *Für Beispiel 19 wurde das nicht-nachbehandelte Rohsiloxan aus Beispiel 17 verwendet und mit HCl als Katalysator gemäß der oben aufgeführten Vorschrift umgesetzt.**

| Bsp. | Viskosität Rohsiloxan [mPa*s] | Rest-Alkoxy-Gehalt Rohsiloxan [Gew.-%] | Nachbehandlung | Viskosität Produkt [mPa*s] | Rest-Alkoxy-Gehalt [Gew.-%] |
|---|---|---|---|---|---|
| 7 | - | - | - | 154 | 0,23 |
| 8 | 127,2 | 1,6 | Purolite/Si2 | 1281 | 0,05 |
| 9 | 68,1 | 4,8 | Purolite/Si2 | 184 | 0,22 |
| 10 | 573,5 | 2,8 | KOH | 14012 | 0,96 |
| 11 | 51,1 | 3,2 | Purolite/Si2 | 187 | 0,33 |
| 12 | 1956,7 | 4,8 | Purolite/Si2 | 21326 | 0,73 |
| 13 | - | - | Purolite/Si2 | 7501 | 0,18 |
| 14 | - | - | Purolite/Si2 | 9720 | 0,72 |
| 15 | - | - | Purolite/Si2 | 138 | 0,08 |
| 16 | - | - | Purolite/Si2 | 980 | 0,58 |
| 17 | - | - | Tonsil/Si2 | 150 | 0,52 |
| 18 | - | - | Purolite/Si2 | 80 | 0,19 |
| 19* | - | - | HCl/Si2 | 175 | <0,01 |

Eine Zusammenfassung der Einwaagen und analytischen Daten der Siloxane nach der Funktionalisierung ist der Tabelle 10 zu entnehmen.

**Tabelle 10: *Die Katalysatordosierung der NaOMe-Lösung (20 Gew.-% in MeOH) betrug 500 Gew.-ppm (bezogen auf die Gesamtmasse aus Basis-Siloxan und Aminosilan)**

| Bsp. | Siloxan [Bsp.] | Einwaage Siloxan [g] | Reagenz [g] | Kat. [g] | Viskosität [mPa*s] | Rest-Alkoxy-Gehalt [Gew%] | Iodzahl | Aminzahl [meq/g] |
|---|---|---|---|---|---|---|---|---|
| 20 | 15 | 251 | VSi₂, 14,5 | Purolite, 20 | 179 | <0,01 | 7,4 | - |
| 21 | 16 | 265 | VSi₂, 49,1 | Purolite, 13 | 1081 | 0,04 | 15,4 | - |
| 22 | 17 | 300 | VSi₂, 17,1 | Purolite, 21 | 290 | 0,06 | 6,8 | - |
| 23 | 18 | 352 | VSi₂, 40,2 | Purolite, 27 | 145 | 0,82 | 6,6 | - |
| 24 | 13 | 738 | AS1, 11,5 | NaOMe* | 6871 | 0,65 | - | 0,12 |
| 25 | 16 | 1296 | AS1, 42,6 | NaOMe* | 856 | 1,64 | - | 0,28 |

Für die Beispiele 7 bis 25 wurde der Gehalt an D-Cyclen mittels GC-FID untersucht, mit dem Ergebnis, dass keine D-Cyclen nachgewiesen werden konnten.

## Patentansprüche

1. Kieselsäure, die mit einem Siloxan der allgemeinen Formel (I) funktionalisiert ist
[SiO_{4/2}]ₐ [R¹SiO_{3/2}]_{b} [R³R¹SiO_{2/2}]_{c} [R¹₃SiO_{1/2}]_{d} [O_{1/2}R²]ₑ **(I),**
wobei die Indices a, *b, c,* d, e unabhängig voneinander die ganzzahligen Werte annehmen
a von 0 bis 100,
b von 0 bis 100,
c von 0 bis 50,
d von 3 bis 200,
e von 0 bis 50,
mit der Maßgabe, dass die Summe aus a, b und c mindestens 1 ist und für mehr als 50 % der Siloxane in der Mischung die Summe aus a, b und c ≥ 4 ist;
wobei **R¹** unabhängig voneinander H, Aminogruppe, unsubstituierter oder substituierter C₁-C₂₀-Alkylrest, unsubstituierter oder substituierter C₂-C₂₀-Alkenylrest, unsubstituierter oder substituierter C₆-C₁₄-Arylrest ist; wobei **R²** unabhängig voneinander H, unsubstituierter oder substituierter C₁-C₂₀-Kohlenwasserstoffrest ist;
wobei **R³** unabhängig voneinander H, Aminogruppe, unsubstituierter oder substituierter C₂-C₂₀-Alkylrest, unsubstituierter oder substituierter C₂-C₂₀-Alkenylrest, unsubstituierter oder substituierter C₆-C₁₄-Arylrest ist, wobei substituiert bedeutet, dass unabhängig voneinander mindestens ein Substituent aus der Gruppe mit OR^{Y}, -NR^{Y}₂, -SH, -SR^{Y}, Epoxy, -COOR^{Y}, -CHO, -CN, -NCO, -OCOOR^{Y}, -NR^{Y}-COOR^{Y}, -NR^{Y}-CO-NR^{Y}, -SiR^{Y}₃ und -OSiR^{Y}₃ vorhanden ist, wobei **R^{Y}** unabhängig voneinander H, Aminogruppe, unsubstituierter oder substituierter C₁-C₂₀-Alkylrest, unsubstituierter oder substituierter C₂-C₂₀-Alkenylrest, unsubstituierter oder substituierter C₆-C₁₄-Arylrest ist.

2. Kieselsäure nach Anspruch 1, **dadurch gekennzeichnet, dass** die Indices *a, b, c, d, e* unabhängig voneinander die ganzzahligen Werte annehmen
a von 0 bis 30,
b von 0 bis 30,
c von 0 bis 15,
d von 3 bis 60,
e von 0 bis 15.

3. Kieselsäure nach Anspruch 1 oder 2, **dadurch gekennzeichnet, dass** der Wert des Index a und/oder des Index c gleich 0 ist.

4. Kieselsäure nach einem der vorhergehenden Ansprüche, **dadurch gekennzeichnet, dass** der Gehalt an D-Cyclen weniger als 250 ppmw, bevorzugt weniger als 150 ppmw, besonders bevorzugt weniger als 60 ppmw, beträgt.

5. Verfahren zur Herstellung einer funktionalisierten Kieselsäure, insbesondere nach zumindest einem der Ansprüche 1 bis 4, durch Umsetzen einer unfunktionalisierten Kieselsäure mit einem Siloxan der allgemeinen Formel (I)
[SiO_{4/2}]ₐ [R¹SiO_{3/2}]_{b} [R³R¹SiO_{2/2}]_{c} [R¹₃SiO_{1/2}]_{d} [O_{1/2}R²]ₑ **(I),**
wobei die Indices *a, b, c, d, e* unabhängig voneinander die ganzzahligen Werte annehmen
*a* von 0 bis 100,
*b* von 0 bis 100,
*c* von 0 bis 50,
*d* von 3 bis 200,
*e* von 0 bis 50,
mit der Maßgabe, dass die Summe aus a, b und c mindestens 1 ist und für mehr als 50 % der Siloxane in der Mischung die Summe aus a, b und c ≥ 4 ist;
wobei **R¹** unabhängig voneinander H, Aminogruppe, unsubstituierter oder substituierter C₁-C₂₀-Alkylrest, unsubstituierter oder substituierter C₂-C₂₀-Alkenylrest, unsubstituierter oder substituierter C₆-C₁₄-Arylrest ist; wobei **R²** unabhängig voneinander H, unsubstituierter oder substituierter C₁-C₂₀-Kohlenwasserstoffrest ist;
wobei **R³** unabhängig voneinander H, Aminogruppe, unsubstituierter oder substituierter C₂-C₂₀-Alkylrest, unsubstituierter oder substituierter C₂-C₂₀-Alkenylrest, unsubstituierter oder substituierter C₆-C₁₄-Arylrest ist, wobei substituiert bedeutet, dass unabhängig voneinander mindestens ein Substituent aus der Gruppe mit OR^{Y}, -NR^{Y}₂, -SH, -SR^{Y}, Epoxy, -COOR^{Y}, -CHO, -CN, -NCO, -OCOOR^{Y}, -NR^{Y}-COOR^{Y}, -NR^{Y}-CO-NR^{Y}, -SiR^{Y}₃ und -OSiR^{Y}₃ vorhanden ist, wobei **R^{Y}** unabhängig voneinander H, Aminogruppe, unsubstituierter oder substituierter C₁-C₂₀-Alkylrest, unsubstituierter oder substituierter C₂-C₂₀-Alkenylrest, unsubstituierter oder substituierter C₆-C₁₄-Arylrest ist;
und wobei der Gehalt an Alkoxygruppen, R² ≠ H, weniger als 5 Mol.-% und der Gehalt an Silanolgruppen, R² = H, weniger als 500 ppm beträgt und das Siloxan eine Viskosität von 5 bis 500000 mPa*s aufweist, wobei die Viskosität mit einem Stabinger Rotationsviskosimeter bei 25°C und in einem Temperaturbereich von -40 bis 90°C bestimmt wird.

6. Verfahren nach Anspruch 5, **dadurch gekennzeichnet, dass** die Indices *a, b, c, d, e* unabhängig voneinander die ganzzahligen Werte annehmen
*a* von 0 bis 30,
*b* von 0 bis 30,
*c* von 0 bis 50,
*d* von 3 bis 60,
*e* von 0 bis 15.

7. Verfahren nach Anspruch 5 oder 6, **dadurch gekennzeichnet, dass** der Wert des Index a und/oder des Index c 0 ist.

8. Verfahren nach zumindest einem der Ansprüche 5 bis 7,
**dadurch gekennzeichnet, dass** das Siloxan frei von D-Cyclen ist.

9. Verfahren nach zumindest einem der Ansprüche 6 bis 8,
**dadurch gekennzeichnet, dass** das Verhältnis des Index d zum Index *b* bei 0,15 bis 3, bevorzugt bei 0,2 bis 2, besonders bevorzugt bei 0,3 bis 1 liegt.

10. Verfahren nach zumindest einem der Ansprüche 6 bis 9,
**dadurch gekennzeichnet, dass R²** unabhängig voneinander ein unsubstituierter C₁-C₁₂-Kohlenwasserstoffrest, bevorzugt C₁-C₆-Kohlenwasserstoffrest, besonders bevorzugt Methyl oder Ethyl, ist.

11. Verfahren nach zumindest einem der Ansprüche 5 bis 10,
**dadurch gekennzeichnet, dass** die unfunktionalisierte Kieselsäure eine Oberfläche von 50 bis 400 m²/g aufweist.

12. Verfahren nach zumindest einem der Ansprüche 6 bis 11,
**dadurch gekennzeichnet, dass** die Umsetzung bei einer Temperatur von 25 bis 400°C, besonders bevorzugt von 200 bis 400°C, insbesondere von 200 bis 350°C, erfolgt.

13. Verwendung der Kieselsäuren nach zumindest einem der Ansprüche 1 bis 4 oder der nach dem Verfahren gemäß zumindest einem der Ansprüche 5 bis 12 hergestellten Kieselsäuren als Additiv zur Steuerung der Rheologie von flüssigen und pulverförmigen Systemen, insbesondere von Kleb- und Dichtstoffen, von Tonern und Entwicklern.

## Claims

1. Silica functionalized with a siloxane of the general formula (I)
[SiO_{4/2}]ₐ [R¹SiO_{3/2}]_{b} [R³R¹SiO_{2/2}]_{c} [R¹₃SiO_{1/2}]_{d} [O_{1/2}R²]ₑ (I),
where the indices *a, b, c, d, e* each independently have integer values
*a* from 0 to 100,
*b* from 0 to 100,
*c* from 0 to 50,
*d* from 3 to 200,
*e* from 0 to 50,
with the proviso that the sum of a, b and c is at least 1 and for more than 50% of the siloxanes in the mixture the sum of a, b and c is ≥ 4;
where **R¹** is each independently H, an amino group, unsubstituted or substituted C₁-C₂₀-alkyl radical, unsubstituted or substituted C₂-C₂₀-alkenyl radical, unsubstituted or substituted C₆-C₁₄-aryl radical; where **R²** is each independently H, an unsubstituted or substituted C₁-C₂₀-hydrocarbon radical;
where **R³** is each independently H, an amino group, unsubstituted or substituted C₂-C₂₀-alkyl radical, unsubstituted or substituted C₂-C₂₀-alkenyl radical, unsubstituted or substituted C₆-C₁₄-aryl radical,
wherein substituted signifies that independently of one another at least one substituent is present from the group of OR^{Y}, -NR^{Y}₂, -SH, -SR^{Y}, epoxy, -COOR^{Y}, - CHO, -CN, -NCO, -OCOOR^{Y}, -NR^{Y}-COOR^{Y}, -NR^{Y}-CO-NR^{Y}, - SiR^{Y}₃ and -OSiR^{Y}₃, where **R^{Y}** is each independently H, an amino group, unsubstituted or substituted C₁-C₂₀-alkyl radical, unsubstituted or substituted C₂-C₂₀-alkenyl radical, unsubstituted or substituted C₆-C₁₄-aryl radical.

2. Silica according to Claim 1, **characterized in that** the indices *a, b, c, d, e* each independently have integer values
*a* from 0 to 30,
*b* from 0 to 30,
*c* from 0 to 15,
*d* from 3 to 60,
*e* from 0 to 15.

3. Silica according to Claim 1 or 2, **characterized in that** the value of the index a and/or the index c is equal to 0.

4. Silica according to any of the preceding claims, **characterized in that** the content of D-cycles is less than 250 ppmw, preferably less than 150 ppmw, particularly preferably less than 60 ppmw.

5. Process for producing a functionalized silica, in particular according to at least one of Claims 1 to 4, by reacting an unfunctionalized silica with a siloxane of the general formula (I)
[SiO_{4/2}]ₐ [R¹SiO_{3/2}]_{b} [R³R¹SiO_{2/2}]_{c} [R¹₃SiO_{1/2}]_{d} [O_{1/2}R²]ₑ **(I),**
where the indices *a, b, c, d, e* each independently have integer values
*a* from 0 to 100,
*b* from 0 to 100,
*c* from 0 to 50,
*d* from 3 to 200,
*e* from 0 to 50,
with the proviso that the sum of a, b and c is at least 1 and for more than 50% of the siloxanes in the mixture the sum of a, b and c is ≥ 4;
where **R¹** is each independently H, an amino group, unsubstituted or substituted C₁-C₂₀-alkyl radical, unsubstituted or substituted C₂-C₂₀-alkenyl radical, unsubstituted or substituted C₆-C₁₄-aryl radical; where **R²** is each independently H, an unsubstituted or substituted C₁-C₂₀-hydrocarbon radical;
where **R³** is each independently H, an amino group, unsubstituted or substituted C₂-C₂₀-alkyl radical, unsubstituted or substituted C₂-C₂₀-alkenyl radical, unsubstituted or substituted C₆-C₁₄-aryl radical,
wherein substituted signifies that independently of one another at least one substituent is present from the group of OR^{Y}, -NR^{Y}₂, -SH, -SR^{Y}, epoxy, -COOR^{Y}, - CHO, -CN, -NCO, -OCOOR^{Y}, -NR^{Y}-COOR^{Y}, -NR^{Y}-CO-NR^{Y}, - SiR^{Y}₃ and -OSiR^{Y}₃, where **R^{Y}** is each independently H, an amino group, unsubstituted or substituted C₁-C₂₀-alkyl radical, unsubstituted or substituted C₂-C₂₀-alkenyl radical, unsubstituted or substituted C₆-C₁₄-aryl radical;
and wherein the alkoxy group content, R² ≠ H, is less than 5 mol% and the silanol group content, R² = H, is less than 500 ppm and the siloxane has a viscosity of 5 to 500 000 mPa*s, the viscosity being determined using a Stabinger rotational viscometer at 25°C and in a temperature range from -40 to 90°C.

6. Process according to Claim 5, **characterized in that** the indices *a, b, c, d, e* each independently have integer values
*a* from 0 to 30,
*b* from 0 to 30,
*c* from 0 to 50,
*d* from 3 to 60,
*e* from 0 to 15.

7. Process according to Claim 5 or 6, **characterized in that** the value of the index *a* and/or the index *c* is 0.

8. Process according to at least one of Claims 5 to 7, **characterized in that** the siloxane is free from D-cycles.

9. Process according to at least one of Claims 6 to 8, **characterized in that** the ratio of the index *d* to the index *b* is 0.15 to 3, preferably 0.2 to 2, particularly preferably 0.3 to 1.

10. Process according to at least one of Claims 6 to 9, **characterized in that R²** is each independently an unsubstituted C₁-C₁₂-hydrocarbon radical, preferably C₁-C₆-hydrocarbon radical, particularly preferably methyl or ethyl.

11. Process according to at least one of Claims 5 to 10, **characterized in that** the unfunctionalized silica has a surface area of 50 to 400 m²/g.

12. Process according to at least one of Claims 6 to 11, **characterized in that** the reaction is carried out at a temperature of 25 to 400°C, particularly preferably 200 to 400°C, especially 200 to 350°C.

13. Use of the silicas according to at least one of Claims 1 to 4 or of the silicas produced according to the process according to at least one of Claims 5 to 12 as additive for controlling the rheology of liquid and pulverulent systems, particularly of adhesives and sealants, of toners and developers.

## Revendications

1. Silice fonctionnalisée par un siloxane de formule générale (I)
[SiO_{4/2}]ₐ [R¹SiO_{3/2}]_{b} [R³R²SiO_{2/2}]_{c} [R¹₃SiO_{1/2}]_{d} [O_{1/2}R²]ₑ (I),
les indices a, b, c, d, e représentant, indépendamment les uns des autres, les valeurs entières
a de 0 à 100,
b de 0 à 100,
c de 0 à 50,
d de 3 à 200,
e de 0 à 50,
étant entendu que la somme de a, b et c vaut au moins 1 et que pour plus de 50% des siloxanes dans le mélange, la somme de a, b et c est ≥ 4 ;
R¹ représentant, indépendamment, H, groupe amino, radical C₁-C₂₀-alkyle non substitué ou substitué, radical C₂-C₂₀-alcényle non substitué ou substitué, radical C₆-C₁₄-aryle non substitué ou substitué ;
R² représentant, indépendamment, H, radical C₁-C₂₀-hydrocarboné non substitué ou substitué ;
R³ représentant, indépendamment, H, groupe amino, radical C₂-C₂₀-alkyle non substitué ou substitué, radical C₂-C₂₀-alcényle non substitué ou substitué, radical C₆-C₁₄-aryle non substitué ou substitué, substitué signifiant qu'indépendamment les uns des autres, au moins un substituant du groupe comprenant OR^{Y}, -NR^{Y}₂, -SH, -SR^{Y}, époxy, -COOR^{Y}, -CHO, -CN, -NCO, -OCOOR^{Y}, -NR^{Y}-COOR^{Y}, -NR^{Y}-CO-NR^{Y}, -SiR^{Y}₃ et -OSiR^{Y}₃ est présent, R^{Y} représentant, indépendamment, H, groupe amino, radical C₁-C₂₀-alkyle non substitué ou substitué, radical C₂-C₂₀-alcényle non substitué ou substitué, radical C₆-C₁₄-aryle non substitué ou substitué.

2. Silice selon la revendication 1, **caractérisée en ce que** les indices a, b, c, d, e représentent, indépendamment les uns des autres, les valeurs entières
a de 0 à 30,
b de 0 à 30,
c de 0 à 15,
d de 3 à 60,
e de 0 à 15.

3. Silice selon la revendication 1 ou 2, **caractérisée en ce que** la valeur de l'indice a et/ou de l'indice c vaut 0.

4. Silice selon l'une des revendications précédentes, **caractérisée en ce que** la teneur en cycles D est inférieure à 250 ppm en poids, de préférence inférieure à 150 ppm en poids, de manière particulièrement préférée inférieure à 60 ppm en poids.

5. Procédé pour la préparation d'une silice fonctionnalisée, en particulier selon au moins l'une des revendications 1 à 4 par transformation d'une silice non fonctionnalisée avec un siloxane de formule générale (I)
[SiO_{4/2}]ₐ [R¹SiO_{3/2}]_{b} [R³R¹SiO_{2/2}]_{c} [R¹₃SiO_{1/2}]_{d} [O_{1/2}R²]ₑ (I),
les indices a, b, c, d, e représentant, indépendamment les uns des autres, les valeurs entières
a de 0 à 100,
b de 0 à 100,
c de 0 à 50,
d de 3 à 200,
e de 0 à 50,
étant entendu que la somme de a, b et c vaut 1 et que pour plus de 50% des siloxanes dans le mélange, le somme de a, b et c est ≥ 4 ;
R¹ représentant, indépendamment, H, groupe amino, radical C₁-C₂₀-alkyle non substitué ou substitué, radical C₂-C₂₀-alcényle non substitué ou substitué, radical C₆-C₁₄-aryle non substitué ou substitué ;
R² représentant, indépendamment, H, radical C₁-C₂₀-hydrocarboné non substitué ou substitué ;
R³ représentant, indépendamment, H, groupe amino, radical C₂-C₂₀-alkyle non substitué ou substitué, radical C₂-C₂₀-alcényle non substitué ou substitué, radical C₆-C₁₄-aryle non substitué ou substitué,
substitué signifiant qu'indépendamment les uns des autres, au moins un substituant du groupe comprenant OR^{Y}, -NR^{Y}₂, -SH, -SR^{Y}, époxy, -COOR^{Y}, -CHO, -CN, -NCO, -OCOOR^{Y}, -NR^{Y}-COOR^{Y}, -NR^{Y}-CO-NR^{Y}, -SiR^{Y}₃ et -OSiR^{Y}₃ est présent, R^{Y} représentant, indépendamment, H, groupe amino, radical C₁-C₂₀-alkyle non substitué ou substitué, radical C₂-C₂₀-alcényle non substitué ou substitué, radical C₆-C₁₄-aryle non substitué ou substitué ;
et la teneur en groupes alcoxy, R² ≠ H, étant inférieure à 5% en mole et la teneur en groupes silanol, R² = H, étant inférieure à 500 ppm et le siloxane présentant une viscosité de 5 à 500.000 mPa.s, la viscosité étant déterminée à l'aide d'un viscosimètre rotatif de Stabinger à 25°C et dans la plage de température de -40 à 90°C.

6. Procédé selon la revendication 5, **caractérisé en ce que** les indices a, b, c, d, e représentent, indépendamment les uns des autres, les valeurs entières
a de 0 à 30,
b de 0 à 30,
c de 0 à 50,
d de 3 à 60,
e de 0 à 15.

7. Procédé selon la revendication 5 ou 6, **caractérisé en ce que** la valeur de l'indice a et/ou de l'indice c vaut 0.

8. Procédé selon au moins l'une des revendications 5 à 7, **caractérisé en ce que** le siloxane est exempt de cycles D.

9. Procédé selon au moins l'une des revendications 6 à 8, **caractérisé en ce que** le rapport de l'indice d à l'indice b se situe à 0,15 jusqu'à 3, de préférence à 0,2 jusqu'à 2, de manière particulièrement préférée à 0,3 jusqu'à 1.

10. Procédé selon au moins l'une des revendications 6 à 9, **caractérisé en ce que** R² représente, indépendamment, un radical C₁-C₁₂-hydrocarboné, de préférence un radical C₁-C₆-hydrocarboné, non substitué, de manière particulièrement préférée méthyle ou éthyle.

11. Procédé selon au moins l'une des revendications 5 à 10, **caractérisé en ce que** la silice non fonctionnalisée présente une surface spécifique de 50 à 400 m²/g.

12. Procédé selon au moins l'une des revendications 6 à 11, **caractérisé en ce que** la transformation a lieu à une température de 25 à 400°C, de manière particulièrement préférée de 200 à 400°C et en particulier de 200 à 350°C.

13. Utilisation des silices selon au moins l'une des revendications 1 à 4 ou des silices préparées selon le procédé selon au moins l'une des revendications 5 à 12 comme additif pour la régulation de la rhéologie de systèmes liquides et sous forme de poudre, en particulier d'adhésifs et de matériaux d'étanchéité, de toners et de développeurs.
